# EUROPÄISCHE PATENTSCHRIFT

(11) **EP 3 947 140 B1**
(45) Veröffentlichungstag und Bekanntmachung des Hinweises auf die Patenterteilung: **21.12.2022**
(21) Anmeldenummer: 20714470.0
(22) Anmeldetag: 06.03.2020
(51) Int. Cl.: B63G 8/14, B63G 8/42, B64C 13/16, F41J 9/10

(54) **MANÖVRIERFÄHIGER MESSKÖRPER ZUR ERMITTLUNG VON MESSDATEN MIT FEHLFUNKTIONSMODUL**
MANOEUVRABLE MEASUREMENT BODY FOR DETERMINING MEASUREMENT DATA HAVING MALFUNCTION MODULE
CORPS DE MESURE MANOEUVRABLE POUR DÉTERMINER DES DONNÉES DE MESURE, DOTÉ D'UN MODULE DE FONCTION D'ERREUR

(30) Priorität: 28.03.2019 DE 102019107976
(43) Veröffentlichungstag der Anmeldung: 09.02.2022
(73) Patentinhaber: Alfred-Wegener-Institut Helmholtz-Zentrum für Polar- und Meeresforschung, 27570 Bremerhaven (DE)
(72) Erfinder: HERBER, Andreas, 27472 Cuxhaven (DE); KALMBACH, Dirk, 27576 Bremerhaven (DE); BAYER, Hans-Jörg, 85139 Wettstetten (DE)
(86) Internationale Anmeldenummer: PCT/DE2020/100154
(87) Internationale Veröffentlichungsnummer: WO 2020/192823

(56) Entgegenhaltungen:
- WO-A1-2016/135326
- DE-A1-102014 001 873
- DE-B4-102014 001 873
- GB-A- 715 215
- US-A- 3 812 806

## Beschreibung

Die Erfindung bezieht sich auf einen manövrierfähigen Messkörper zur Ermittlung von Messdaten während seines Durchgangs durch ein Fluid zumindest mit zwei im Mittenbereich des Messkörpers angeordneten Tragflächen, mehreren um Drehachsen verstellbaren und ansteuerbaren Rudern, ein beim Auftreten einer Fehlfunktion automatisch aktiviertes Fehlfunktionsmodul mit zumindest einem ersten Fehlfunktionssystem zur Rückstellung der Ruder in ihre zentrale Nullstellung und mit Akkumulatoren zur elektrischen Energieversorgung und Sensoren zur Ermittlung der Messdaten und der Position des Messkörpers.

Derartige Messkörper dienen der berührungsfreien Fernerkundung und sind unbemannt. Sie können sich autonom bewegen und verfügen über einen eigenen Antrieb, oder sie werden von einem angetriebenen Fahrzeug geschleppt und haben keinen eigenen Antrieb. Sie können in der Luft oder im Wasser agieren. Da sie dabei in allen drei Raumachsen manövrieren können, unterliegen derartige manövrierfähige Messkörper besonderen Sicherheitsauflagen. Deshalb verfügen sie über ein Fehlfunktionsmodul mit zumindest einem ersten Fehlfunktionssystem, dass bei einer auftretenden Fehlfunktion automatisch auslöst und alle vorhandenen Ruder in ihre zentrale Nullstellung für eine stabile, horizontal und vertikal konstante Vorwärtsbewegung zurückstellt.

### Stand der Technik

Der der Erfindung nächstliegende Stand der Technik wird in der DE 10 2014 001 873 B4 offenbart. Dort wird ein geschleppter aktiver Flugkörper zur Ermittlung von Messdaten beschrieben, der über ein erstes, elektromechanisches Fehlfunktionssystem verfügt. Dieses besteht aus mehreren federbelasteten Drehhebeln, über die alle Ruder des Flugkörpers, die auch im Fehlerfall drehbar sind (also über analoge Servos angesteuert oder entkoppelt werden), bei einer Fehlfunktion in ihre zentrale Nullstellung gefahren werden. Dadurch kann der Flugkörper einfach gehievt werden, ohne dass er dabei eigene (störende) Manövrierbewegungen ausführt. Die Auslösung erfolgt über einen elektromagnetischen Schalter, der bei einem Ausfall seiner Stromversorgung oder bei einem entsprechenden Steuerbefehl in eine Auslöseposition verfährt und eine federbelastete Drehscheibe freigibt. Das elektromechanische Fehlfunktionssystem erfordert einen entsprechenden konstruktiven Aufwand. Weitere Fehlfunktionssysteme sind nicht vorgesehen.

Aus der WO 2013/076708 A1 ist ein Messkörper bekannt, der von einem Hubschrauber geschleppt werden kann. Zur Stabilisierung beim Flug weist der Flugkörper mehrere Flossen und Stabilisierungsflügel auf. Diese sind unverstellbar ausgebildet, sodass es sich um einen passiven Flugkörper handelt. Die US 4 014 481 A zeigt einen aktiven Flugkörper, der als manövrierfähiges Luftziel an einem Flugzeug geschleppt werden kann. Der Flugkörper weist neben zwei orthogonalen Stabilisierungsflügelpaaren zwei orthogonale Flügelpaare auf, in die elektromagnetisch verstellbare Ruder integriert sind. Der Flugkörper kann durch deren Verstellung um zwei Achsen gedreht werden. Da der Flugkörper keine Messinstrumente trägt, handelt es sich aber nicht um einen Messkörper.

Aus der EP 1 795 987 A2 ist weiterhin ein Ansteuersystem für ein Ruder bekannt, bei dem dieses über das Ausfahren eines Hydraulikkolbens verstellt werden kann. Hierbei handelt es sich aber nicht um ein Sicherheitssystem. Weiterhin ist es aus der FR 2 521 098 A1 bekannt, einen manövrierbaren Gleiter mit einem Schleppflugzeug in die Luft zu bringen, wobei der Gleiter unter dem Flugzeug verankert ist und angeschwenkte Tragflügel aufweist. In erreichter Flughöhe wird der Gleiter freigegeben und an einem Tragseil geschleppt. Wenn ein ausreichender Abstand zum Flugzeug erreicht ist, werden die Tragflügel des Gleiters ausgeschwenkt und dieser steigt in eine Flughöhe oberhalb des Flugzeuges auf. Bei Einholen des Gleiters werden die Tragflügel wieder eingeschwenkt. Konstruktionen zum Verschwenken von Tragflügeln sind beispielsweise aus der US 4 022 403 A oder der DE 78 04 927 U1 bekannt. Aus der DE 10 2009 057 818 A1 ist weiterhin ein Sensorträger bekannt, der aus einem Flugzeug abgeworfen wird. Nach dem Abwurf werden Tragflächen und Ruder ausgefahren und der Sensorträger ist während seines Falls begrenzt manövrierfähig. Aus der US 9 613 539 B1 ist es bekannt, für eine Drohne Luftkissen an der Außenseite vorzusehen, die im Falle eines Absturzes aufgeblasen werden und so den Aufprall abdämpfen. Schließlich ist es aus der DE 10 2014 018 857 B4 bekannt, für den gattungsgemäßen Messkörper eine aerodynamisch besonders günstige Form bei einem gleichzeitig großen Ladevolumen vorzusehen.

### Aufgabenstellung

Ausgehend von dem nächstliegenden Stand der Technik ist die **Aufgabe** für die vorliegende Erfindung darin zu sehen, den eingangs beschriebenen gattungsgemäßen Messkörper so weiterzubilden, dass das erste Fehlfunktionssystem zur sicheren Rückstellung aller Ruder in ihre zentrale Nullstellung beim Auftreten einer Fehlfunktion auf einem anderen als einem konstruktiv relativ aufwändigen elektromechanischen Prinzip beruht. Dabei soll das nunmehr umgesetzte Prinzip konstruktionstechnisch einfacher umsetzbar sein. Die erfindungsgemäße **Lösung** für diese Aufgabe ist dem Anspruch 1 zu entnehmen. Vorteilhafte Weiterbildungen der Erfindung werden in den Unteransprüchen aufgezeigt und im Folgenden im Zusammenhang mit der Erfindung näher erläutert.

Der beanspruchte Messkörper ist erfindungsgemäß dadurch gekennzeichnet, dass das erste Fehlfunktionssystem pro Ruder einen Druckzylinder mit einem ausfahrbaren Kolben, wobei jeder Kolben einen Kolbenboden und eine daran befestigte Kolbenstange mit einem Führungselement aufweist, das in ein Aufnahmeelement einfahrbar ist, wobei jedes Aufnahmeelement fest am jeweiligen Ruder um dessen Drehachse herum angeordnet ist und eine in dessen zentrale Nullstellung lenkende Kontur aufweist, und ein gemeinsames Druckgefäß umfasst, das mit den Druckzylindern über Fluidleitungen verbunden ist und ein elektromagnetisches Sperrventil aufweist, das beim Aktivieren des Fehlfunktionsmoduls automatisch geöffnet wird, wobei alle Kolben durch eine Druckbeaufschlagung der Kolbenböden durch das Fluid unmittelbar ausgestoßen werden. Bei dem mit der Erfindung beanspruchten Messkörper ist das erste Fehlfunktionssystem elektrofluidisch ausgebildet. Es besteht aus einem einfachen Druckzylinder an jedem Ruder und einem gemeinsamen Druckgefäß. Damit ist das erste Fehlfunktionssystem konstruktiv sehr einfach aufgebaut, einfach montier- und wartbar und besonders störunanfällig. Im Falle einer Fehlfunktion wird das gemeinsame Druckgefäß automatisch geöffnet und überträgt dabei seinen aufgebauten Innendruck auf alle Druckzylinder, die mit dem gemeinsamen Gefäß über druckfeste Leitungen verbunden sind. Die Druckzylinder fahren schlagartig aus, führen die Ruder in die Nullstellung und blockieren sie dort. Als druckübertragende Fluide kommen beispielsweise Luft (elektropneumatisches System) oder Wasser, Öl (elektrohydraulisches System) infrage. Nach einer Auslösung des ersten Fehlfunktionssystems sind die Kolben der Druckzylinder ausgefahren. Für den nächsten Betriebsfall des Messkörpers müssen sie manuell oder über eine elektrische oder fluidische Ansteuerung wieder eingefahren werden, damit die Ruder wieder für eine Verstellung freigegeben sind.

Die Druckzylinder sind sehr kompakt und können über ihre im Fehlerfall ausgestoßenen Kolben eine relativ große Rückstellkraft auf die Ruder ausüben.

Diese wird über eine Art Kulissensystem in eine Rückstellbewegung umgesetzt, bei dem die Kolbenstange mit ihrem freien Ende in eine lenkende Führung am Ruder einfährt. Dabei ist es gemäß einer ersten Erfindungsausgestaltung besonders vorteilhaft und bevorzugt, wenn das Führungselement in Form einer Ellipse mit einer großen Halbachse, die in Verlängerung der Kolbenstange angeordnet ist, und das Aufnahmeelement in Form eines Aufnahmewinkels mit einem Scheitelpunkt ausgebildet ist, wobei die Drehachse jedes Ruders in Verlängerung des Scheitelpunkts angeordnet ist. Damit ist das Aufnahmeelement trichterförmig ausgebildet. Es ist sicher gewährleistet, dass auch bei einer maximal ausgelenkten Stellung (in beiden Richtungen, also nach rechts und nach links) des jeweiligen Ruders die Kolbenstange im Fehlerfall in das Aufnahmeelement einfährt. Mit dem Führungselement am Ende der Kolbenstange in Form einer Ellipse wird ein lenkender Kontakt zwischen Führungselement und Aufnahmeelement hergestellt. Beim Entlangfahren der Ellipse an der Trichterwandung werden das Aufnahmeelement und damit das Ruder, das mit dem Aufnahmeelement fest verbunden ist, um seine Drehachse gedreht. Durch die Kontur des Aufnahmeelements steht das Ruder beim vollständigen Einfahren des Kolbens sicher in seiner zentralen Nullstellung. Dabei ist es weiterhin bevorzugt und vorteilhaft, wenn die Kolben in einem Bereich von 2 mm bis 10 mm, bevorzugt 6 mm, besonders bevorzugt 3 mm, ausgefahren werden. Somit sind nur sehr kleine Hübe erforderlich, um die Ruder im Fehlerfalle zurückzustellen. Damit erfolgt die Reaktion des Fehlfunktionssystems sehr schnell (schlagartig) und der Messkörper kann ohne eigene, überlagernde, störende Manövrierbewegungen schnell und sicher geborgen oder anders behandelt werden. Auch die Druckzylinder können entsprechend kleine Dimensionen aufweisen und einfach in die Ruder integrierbar sein.

Da es im Falle einer Fehlfunktion bei der weiteren Behandlung des Messkörpers besonders wichtig ist, diesen zuverlässig unter Kontrolle zu haben (ohne störende eigene Manövrierbewegungen), ist bei dem mit der Erfindung beanspruchten Messkörper bevorzugt und vorteilhaft vorgesehen, dass die beiden Tragflächen um je eine vertikale Drehachse schwenkbar ausgebildet sind und das Fehlfunktionsmodul ein zweites Fehlfunktionssystem umfasst, wobei bei einer Aktivierung des zweiten Fehlfunktionssystems die beiden Tragflächen zum Messkörper hineingeschwenkt werden. Bei dem mit der Erfindung beanspruchten Messkörper ist somit neben dem ersten Fehlfunktionssystem zumindest noch ein zweites Fehlfunktionssystem vorgesehen, das die Zuverlässigkeit der erforderlichen Reaktion im Falle einer auftretenden Fehlfunktion noch weiter erhöht. Dabei handelt es sich bei dem zweiten Fehlfunktionssystem, das auf elektromechanischer Basis arbeitet, um die Ansteuerung von Schwenkflügeln. Die Tragflächen des Messkörpers sind als Schwenkflügel ausgebildet und werden im Fehlerfall einfach zum Messkörper hin eingeschwenkt. Dadurch tragen sie zu dessen Stabilisierung bei.

Damit das Einschwenken der Schwenkflügel im Falle einer Fehlfunktion schnellstmöglich vonstattengeht, ist gemäß einer nächsten Erfindungsausgestaltung bevorzugt und vorteilhaft vorgesehen, dass das zweite Fehlfunktionssystem zwei Zahnscheibensegmente, wobei an jeder Tragfläche ein Zahnscheibensegment fest angeordnet ist und die beiden Zahnscheibensegmente miteinander im Eingriff stehen, sowie ein elektromagnetisch verschiebbares Antriebsritzel und zumindest eine Zugfeder aufweist, wobei das Antriebsritzel mit einem der beiden Zahnscheibensegmente in Eingriff bringbar ist und die Zugfeder fest mit einer der beiden Tragflächen und dem Messkörper verbunden und bei ausgeschwenkten Tragflächen gespannt ist. Im Betriebsfall mit ausgeschwenkten Tragflächen ist das Antriebsritzel in das Zahnscheibensegment eingefahren und blockiert dieses. Im Fehlerfall wird das Antriebsritzel zurückgefahren (Prinzip des Anlassers beim Auto) und der Eingriff zwischen dem Antriebsritzel und dem Zahnscheibensegment gelöst. Die Tragflächen sind nun nicht mehr blockiert und werden von der gespannten Zugfeder in die eingeschwenkte Position entlang des Rumpfes des Messkörpers überführt. Auch dieser Vorgang kann relativ schnell erfolgen. Um Beschädigungen des Messkörpers und der Tragflächen beim schnellen Einschwenken zu vermeiden, können entsprechende Pufferelemente vorgesehen sein. Da bevorzugt und vorteilhaft mittels Antriebsritzel und Zahnscheibensegmente die Tragflächen auch ausschwenkbar sind, werden über das Antriebsritzel die Zahnscheibensegmente auch in der anderen Richtung bewegt und gleichzeitig die Zugfeder gespannt. Bei Erreichen der Endstellung der beiden Tragflächen verriegelt das Antriebsritzel durch seinen dauerhaften Eingriff in eines der beiden Zahnscheibensegmente diese Stellung.

Da mehrere Fehlfunktionssysteme die Sicherheit bei der Bergung des Messkörpers im Falle einer Fehlfunktion erhöhen, ist bei dem Messkörper nach der Erfindung weiterhin bevorzugt und vorteilhaft vorgesehen, dass das Fehlfunktionsmodul ein drittes Fehlfunktionssystem umfasst, wobei bei einer Aktivierung des dritten Fehlfunktionssystems die Ruder in ihre zentrale Nullstellung und die beiden Tragflächen zum Messkörper hin eingeschwenkt werden. Hierbei handelt es sich um ein aktives Fehlfunktionssystem. Die Ruder werden nicht durch die Auslösung der Druckzylinder und die Tragflächen werden nicht durch die Auslösung der Zugfedern zurückgefahren, sondern aktiv in ihre Nullstellung bzw. eingeschwenkte Position überführt. Bei den Rudern erfolgt dies durch einen entsprechenden Steuerbefehl an die Steuerservos, bei den Tragflächen über einen entsprechenden Steuerbefehl an das Antriebsritzel. Dabei ist es bevorzugt und vorteilhaft, wenn das dritte Fehlfunktionssystem computerimplementiert ist und einen Fail-Safe- Steuerdatensatz umfasst. Dieser erzeugt dann die Steuerbefehle an die Steuerservos und das Antriebsritzel.

Im Fall einer Fehlfunktion kann der Messkörper geborgen oder freigegeben werden. In jedem Falle können Beschädigungen am Messkörper und an der Umwelt eintreten. Deshalb ist es bei der Erfindung bevorzugt und vorteilhaft, wenn das Fehlfunktionsmodul ein viertes Fehlfunktionssystem umfasst, das mehrere selbstaufblasende Luftkissen an der Außenseite des Messkörpers aufweist, wobei sich bei einer Aktivierung des vierten Fehlfunktionssystems die Luftkissen selbsttätig aufblasen. Bei dem vierten Fehlfunktionssystem handelt es sich somit nicht um ein auslösendes System mit Auswirkungen auf die Manövrierfähigkeit des Messkörpers, sondern um ein Folgesystem zur Schadensbegrenzung im Fehlerfall. Die aufgeblasenen Luftkissen können - je nach Einsatzfall des Messkörpers - sowohl als Prallschutz im Sinne von Fendern als auch als Auftriebsmittel dienen. Weitere konstruktive Details zum Messkörper nach der Erfindung sind den Ausführungsbeispielen zu entnehmen.

Eine Fehlfunktion kann unterschiedliche Ursachen haben. Besonders in Betracht gezogen werden muss, dass die Fehlfunktion hervorgerufen ist durch einen Ausfall der elektrischen Energieversorgung oder durch das Ansprechen eines Fehlerdetektors oder durch manuelles Eingreifen. Gerade der Ausfall der gesamten Energieversorgung bei einer Speisung aus Akkumulatoren ist eine häufiger auftretende Fehlfunktion bei einem autark betriebenen Messkörper, insbesondere bei sehr langen Messdauern (> 5 h). Tritt diese Fehlfunktion bei ausgelenkten Rudern auf, ist das schnelle Behandeln des Messkörpers extrem erschwert bzw. unmöglich. Bei dem Messkörper nach der Erfindung ist daher sichergestellt, dass bei einem Stromausfall alle Ruder sicher in ihre neutrale Ausgangslage zurückkehren und die Tragflächen eingeschwenkt werden. Dazu werden zwei Fehlfunktionssysteme eingesetzt, von denen das erste auf elektropneumatischer und das zweite auf elektromechanischer Basis arbeitet. Aber auch andere auftretende Fehlfunktionen können zum Auslösen der Fehlfunktionssysteme führen, wenn sie von einem Fehlerdetektor erkannt und in einen Wegfall der elektrischen Energieversorgung oder in rückstellende Steuersignale umgesetzt werden. Hierbei kann es sich beispielsweise um den Ausfall von Mess- oder Navigationsgeräten oder um eine Beschädigung des Messkörpers oder der Ruder oder anderer navigationsrelevanter Komponenten handeln. Schließlich können die Fehlfunktionssysteme noch manuell ausgelöst werden, wenn der Messkörper in irgendeiner Weise behandelt werden soll. Fehlfunktionen werden im zentralen Fehlfunktionsmodul, das alle vorhandenen Fehlfunktionssysteme umfasst, erkannt und gleichzeitig an alle oder an ausgewählte Fehlfunktionssysteme weitergeleitet.

Die Behandlung des Messkörpers im Fehlerfall hängt vornehmlich von seiner Einsatzart ab. Bevorzugt und vorteilhaft kann vorgesehen sein, dass der Messkörper mittels eines Tragseils, das im Mittenbereich des Messkörpers einklinkbar ist, von einem angetriebenen Fahrzeug durch das Fluid schleppbar ist. Der Messkörper ist dann als Schleppkörper ohne eigenen (Haupt-)Antrieb ausgebildet. Alternativ kann aber auch vorgesehen sein, dass der Messkörper autonom durch das Fluid manövriert. Der Messkörper verfügt dann über einen eigenen Antrieb und wird ferngesteuert oder manövriert autonom über eine integrierte Steuereinrichtung. Beide Arten der Ansteuerung gelten im Übrigen auch bei einem geschleppten Messkörper. Schließlich kann es sich bei dem Fluid, das der Messkörper durchzieht, um Luft oder Wasser handeln. Bei Luft kann das schleppende Fahrzeug ein Flugzeug oder ein Hubschrauber sein. Im Wasser wird es sich in der Regel um ein Schiff handeln. In der Luft kann bei einem geschleppten Messkörper von einem CTV (Controlled Towed Vehicle), bei einem autonomen Messkörper von einer Drohne gesprochen werden. Unter Wasser handelt es sich bei einem autonomen Messkörper um einen AUV (Autonomous Underwater Vehicle) oder einfach um einen Unterwasserschleppkörper. Aufgrund der vorgesehenen verschiedenen Fehlfunktionssysteme kann der Messkörper im Falle einer Fehlfunktion immer sicher geborgen werden. Als treffende Bezeichnung eignet sich daher das Akronym "MANTrAS" für "Maneuverable Active New Towed recoverable Atmospheric System" (zumindest für einen Einsatz in Luft).

### Ausführungsbeispiele

Der Messkörper nach der Erfindung und seine vorteilhaften Modifikationen werden anhand der schematischen, nicht maßstäblichen Figuren zum besseren Verständnis nachfolgend noch weitergehend erläutert. Im Einzelnen zeigt die
- **Fig. 1**: den Messkörper in einer perspektivischen Gesamtansicht,
- **Fig. 2A**: den Messkörper in einer schematischen Seitenansicht mit eingeschwenkten Tragflächen,
- **Fig. 2B**: den Messkörper in einer schematischen Unteransicht mit eingeschwenkten Tragflächen,
- **Fig. 2C**: den Messkörper in einer schematischen Seitenansicht mit ausgeschwenkten Tragflächen,
- **Fig. 3A**: den Messkörper im Detail im Bereich des ersten Fehlfunktionssystems (Betriebsfall),
- **Fig 3B**: den Messkörper im Detail im Bereich des ersten Fehlfunktionssystems (Fehlerfall),
- **Fig. 4A**: den Messkörper im Detail im Bereich des zweiten Fehlfunktionssystems mit ausgeschwenkten Tragflächen und
- **Fig. 4B**: den Messkörper im Detail im Bereich des zweiten Fehlfunktionssystems mit eingeschwenkten Tragflächen.

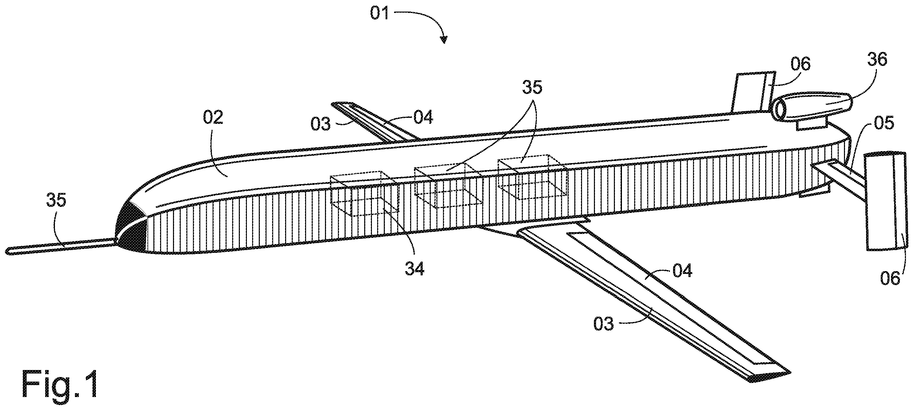

Die **Fig. 1** zeigt eine perspektivische Gesamtansicht eines Messkörpers **01** nach der Erfindung. Dabei sind funktionelle Details, die bestimmen, wie der Messkörper **01** operiert (geschleppt oder autark) und in welchem Fluid (Luft oder Wasser) er operiert, nicht aufgezeigt, da sie für die Funktionsweise der Erfindung im Bereich des Fehlfunktionsmoduls **08** nicht von Bedeutung sind. Dieses funktioniert in allen Ausführungsvarianten des Messkörpers **01** gleichermaßen zuverlässig. Angedeutet hingegen sind in der **Fig. 1** Akkumulatoren **34** zur Stromversorgung von verschiedenen Sensoren **35**. Diese dienen der Aufnahme von wissenschaftlichen Messdaten. Ebenso zählen Sensoren **07** für das autonome Manövrieren des Messkörpers **01** (geschleppt und frei) dazu. Weiterhin ist eine windgetriebene Turbine **36** zum Aufladen der Akkumulatoren **34** dargestellt. Bei einem ungeschleppten Messkörper **01** kann es sich hierbei auch um den Eigenantrieb handeln.

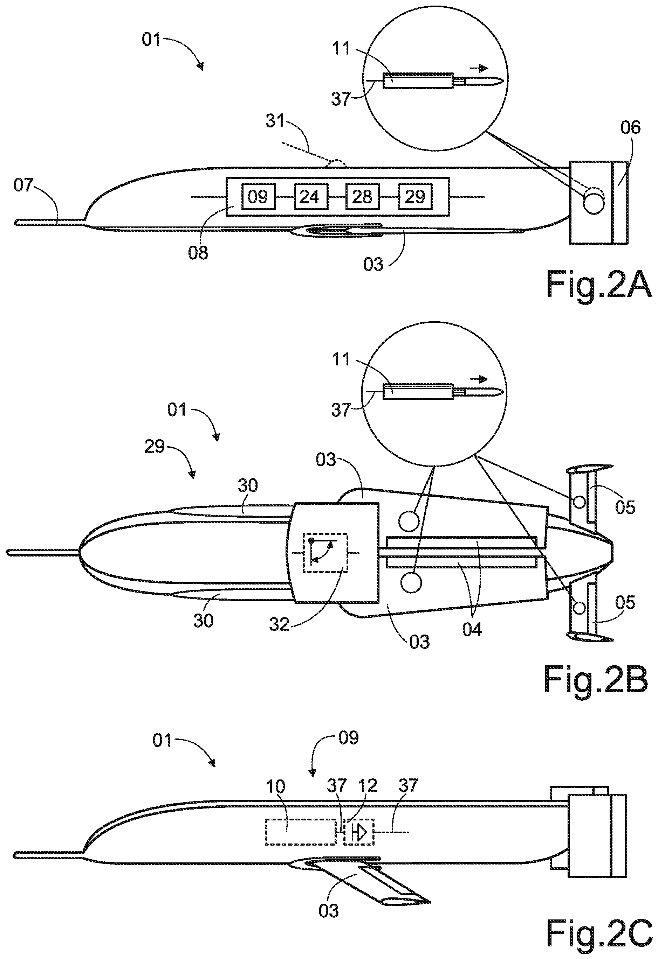

Der Messkörper **01** verfügt über einen aerodynamisch geformten Rumpf **02**, der der Aufnahme aller operationellen Komponenten (beispielsweise Sensoren **35** für den Messbetrieb - Payload) und funktionellen (beispielsweise Sensoren **07** und Komponenten (beispielsweise Akkumulatoren **34**, Steuerungen **32**, Aktoren, Antriebe **36**) für den Manöverbetrieb) dient. Im Mittenbereich des Messkörpers **01** sind an seiner Unterseite zwei schwenkbare Tragflächen **03** angeordnet. In den Tragflächen **03** befinden sich erste Ruder **04** (Querruder) für die Steuerung des Messkörpers **01** um seine Längsachse. Zweite Ruder **05** (Höhenruder) für die Steuerung des Messkörpers **01** um seine Querachse und dritte Ruder **06** (Seitenruder) für die Steuerung des Messkörpers **01** um seine Hochachse sind im Heckbereich des Messkörpers **01** angeordnet, vergleiche **Fig. 2A, 2B****.**

Die **Fig. 2A** zeigt den Messkörper **01** mit dem frontseitigen Sensor **07** (für die Voraussicht) in der Seitenansicht mit nach hinten eingeschwenkten Tragflächen **03**, die **Fig. 2B** von unten mit nach hinten eingeschwenkten Tragflächen **03** und die **Fig. 2C** in der Seitenansicht mit ausgeschwenkten Tragflächen **03**.

Dargestellt ist schematisch ein Fehlfunktionsmodul **08**, das ein erstes Fehlfunktionssystem **09** aufweist. Dieses umfasst ein gemeinsames Druckgefäß **10** und mehrere Druckzylinder **11** (vergleiche **Fig. 2C**), die den Rudern **04**, **05**, **06** zugeordnet sind (siehe herausgezogene Detaildarstellungen **Fig. 2A, 2C****,** die Kreise deuten nur die Zuordnungen zu den Rudern **04, 05, 06 und** nicht die konkrete Einbauposition an). Das Druckgefäß **10** arbeitet im gezeigten Ausführungsbeispiel pneumatisch mit Luft (Druckluft) und ist über Fluidleitungen **37** mit den Druckzylindern **11** verbunden (gestrichelt angedeutet). Hinter dem Druckgefäß **10** und vor den Druckzylindern **11** ist ein elektromagnetisch betätigbares Sperrventil **12** angeordnet. Dieses verschließt das Druckgefäß **10** im normalen Betriebsfall (unter Strom) und öffnet es im Fehlerfall. Das Sperrventil **12** fällt automatisch ab und öffnet, wenn es stromlos wird (Fehlerfall Stromausfall) oder öffnet, wenn es einen entsprechenden Steuerbefehl (andere Fehlerfälle) erhält.

In der **Fig. 2A** ist ein Druckzylinder **11** am dritten Ruder **06** (rechtes Seitenruder, analog linkes Seitenruder) dargestellt. Die **Fig. 2B** zeigt weitere Druckzylinder **11** an den ersten Rudern **04** (linkes und rechtes Querruder in den Tragflächen **03**) und an den zweiten Rudern **05** (linkes und rechtes Höhenruder). Desweiteren ist in der **Fig. 2B** mittig zwischen den Tragflächen **03** eine elektromechanische Ansteuerung **32** für das Ein- und Ausschwenken der beiden Tragflächen **03** angedeutet.

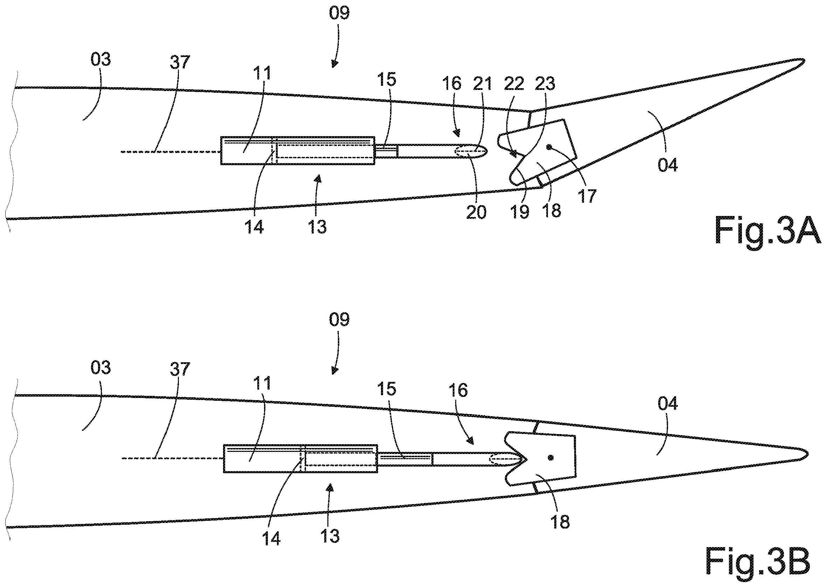

Die **Fig. 3A, 3B** zeigen schematisch ein Detail im Bereich des ersten Fehlfunktionssystems **09** am Beispiel einer Tragfläche **03** mit einem ersten Ruder **04** (Querruder). Zu erkennen ist ein Druckzylinder **11** mit einem ausfahrbaren Kolben **13**. Dieser weist einen Kolbenboden **14** und eine Kolbenstange **15** auf. Am freien Ende (vom Kolbenboden **14** abgewandt) der Kolbenstange **15** ist ein Führungselement **16** angeordnet. Der Druckzylinder **11** ist fest mit der Tragfläche **03** verbunden. Das erste Ruder **04** (Querruder) ist drehbar um eine Drehachse **17** in der Tragfläche **03** angeordnet. Ein Aufnahmeelement **18** umgibt die Drehachse **17** und ist fest mit dem ersten Ruder **04** verbunden. Das Aufnahmeelement **18** weist eine das erste Ruder **04** in seine zentrale Nullstellung lenkende Kontur **19** auf. Das Führungselement **16** ist im gezeigten Ausführungsbeispiel in Form einer Ellipse **20** ausgebildet, deren große Halbachse **21** in Verlängerung der Kolbenstange **15** ausgerichtet ist. Das Aufnahmeelement **18** ist in Form eines Aufnahmewinkels **22** mit einem Scheitelpunkt **23** ausgebildet ist, wobei die Drehachse **17** des ersten Ruders **04** in Verlängerung des Scheitelpunkts **23** angeordnet ist. Das Aufnahmeelement **18** hat somit eine symmetrische, trichterförmige Kontur **19.**

In der **Fig. 3A** ist das erste Ruder **04** in seiner nach oben maximal ausgelenkten Position schematisch dargestellt. Der Kolben **13,** der aufgrund seiner Kompaktheit auch als "Bolzen" bezeichnet werden kann, ist nicht ausgefahren. Der Messkörper **01** befindet sich im Betriebsmodus. In der **Fig. 3B** ist ein Fehlerfall aufgetreten und das Fehlfunktionsmodul **08** bzw. das erste Fehlfunktionssystem **09** und damit die Druckzylinder **11** wurden automatisch oder manuell ausgelöst. Dies erfolgt im gezeigten Ausführungsbeispiel durch eine Beaufschlagung des Kolbenbodens **14** mit Druckluft (elektropneumatisches System) aus dem durch das das Sperrventil **12** schlagartig geöffneten Druckgefäß **10**. Die Kolbenstange **15** wird ausgestoßen und das Führungselement **16** (Ellipse **20**) wird in das Aufnahmeelement **18** (Aufnahmewinkel **22**) eingefahren. Dabei gleitet die Ellipse **20** an der Wandung des Aufnahmewinkels **22** entlang und dreht das erste Ruder **04** um die Drehachse **17** in die zentrale Nullstellung. Analog werden im Fehlerfall alle vorhandenen Ruder **04**, **05**, **06** synchron in ihre zentrale Nullstellung gedreht, sodass der Messkörper **01** keine eigenen Manövrierbewegungen mehr ausführt. Dabei erfolgt die Rückstellung aufgrund der druckbedingten Auslösung und eines relativ kurzen Hubweges der Kolbenstangen **15** (bis **10** mm, bevorzugt 3 mm) sehr schnell und zuverlässig. Alle Ruder **04, 05, 06** lassen eine Rückbewegung im stromlosen Zustand zu (analoge Stellservos oder Entkopplung der Ruder **04, 05, 06** von ihren Antrieben). Im Fehlerfall werden alle Ruder **04, 05, 06** durch das in das Aufnahmeelement **18** eingefahrene Führungselement **16** in der zentralen Nullstellung sicher verriegelt. Eine Entriegelung für eine Wiederaufnahme des Betriebsfalls erfolgt manuell oder maschinell.

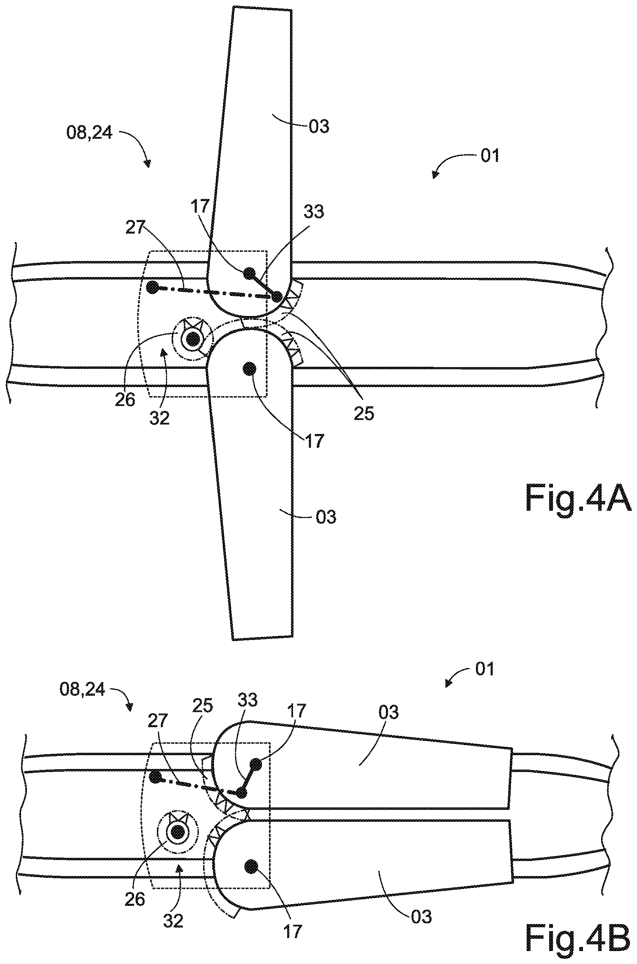

In den **Fig. 4A** (ausgeschwenkte Tragflügel **03**), **Fig. 4B** (eingeschwenkte Tragflügel **03)** ist ein Detail des Messkörpers **01** gemäß **Fig. 2B** in der Unteransicht schematisch dargestellt. Mittig zwischen den Tragflächen **03** befindet sich die elektromechanische Ansteuerung **32** für das Ein- und Ausschwenken der beiden Tragflächen **03**. Diese Funktion ist erforderlich, um ein zweites Fehlfunktionssystem **24** im Fehlfunktionsmodul **08** vorsehen zu können. Damit werden im Fehlerfall die beiden Tragflächen **03** einfach und schnell zum Messkörper **01** hin eingeschwenkt und stabilisieren diesen. Das Einschwenken der beiden Tragflächen **03** ist auch in anderen Situationen als bei einem Fehlerfall möglich und sinnvoll. Hierbei kann es sich beispielsweise um den Transport des Messkörpers **01** an seinem Schleppfahrzeug oder eigenständig auf einem Transportfahrzeug handeln. Auch eine Lagerung des Messkörpers **01** in einer Transportkiste oder einem Regal ist mit eingeschwenkten Tragflächen **03** besonders platzsparend möglich.

Zur Ausführung des zweiten Fehlfunktionssystems **24** ist jede Tragfläche **03** um eine Drehachse **17** schwenkbar angeordnet. Auf den Drehachsen **17** ist auch jeweils ein Zahnscheibensegment **25** angeordnet und fest mit den Tragflächen **03** verbunden. Beide Zahnscheibensegment **25** stehen in Eingriff miteinander. In das eine Zahnscheibensegment **25** greift ein Antriebsritzel **26** ein, das fest mit dem Messkörper **01** verbunden ist. Das Antriebsritzel 26 ist elektrisch angetrieben und beispielsweise elektromagnetisch verschiebbar. Im Betriebsfall wird es magnetisch in seiner Eingriffslage gehalten, im Fehlerfall fällt es daraus ab (nach dem Prinzip des Anlassers bei einem PKW). Im Betriebsfall blockiert das Antriebsritzel **26** das eine Zahnscheibensegment **25**, sodass die beiden Tragflächen **03** in der ausgeschwenkten Stellung sicher verriegelt sind. Weiterhin ist eine Zugfeder **27** (belastbar auf Zug, Energiespeicherung durch Auseinanderziehen) über einen Hebel **33** mit einer der beiden Tragflächen **03** (im dargestellten Ausführungsbeispiel mit der oberen - von der Spitze des Messkörpers **01** her gesehen - linken Tragfläche **03**) verbunden. Mit ihrem anderen Ende ist die Zugfeder **27** fest mit dem Messkörper **01** verbunden. Es können auch zwei Zugfedern **27** mit Verbindung zu je einer Tragfläche **03** vorgesehen sein. Bei ausgeschwenkten Tragflächen **03** ist die Zugfeder **27** gespannt (**Fig. 4A**). Im Fehlerfall (**Fig. 4B**) fällt das Antriebsritzel **26** von dem einen Zahnscheibensegment **25** ab (oder wird verschoben) und gibt dieses frei. Durch das Fehlen der Blockierung zieht sich jetzt die gespannte Zugfeder **27** zusammen und dreht über den Hebel **33** das eine Zahnscheibensegment **25**, das durch seinen Eingriff auch das andere Zahnscheibensegment **25** dreht. Dadurch werden die beiden Tragflächen **03** synchron und sehr schnell nach Auftreten eines Fehlers zum Messkörper **01** hin eingeschwenkt. Im Betriebsfall können die beiden Tragflächen **03** über die beiden Zahnsegmentscheiben **24** und das Antriebsritzel **25** auch ausgeschwenkt werden.

Das in der **Fig. 2A** angedeutete Fehlfunktionsmodul **08** umfasst neben der Ansteuerung des ersten (elektropneumatischen (mit Luft) oder elektrohydraulischen (mit Wasser, Öl)) Fehlfunktionssystems **09** und des zweiten (elektromechanischen) Fehlfunktionssystems **24** auch ein drittes Fehlfunktionssystem **28** auf rein elektronischer Ebene. Hierbei handelt es sich um einen fest programmierten und hinterlegten Steuerdatensatz, der beim Auftreten eines Fehlerfalls (Verlust der Steuersignale) automatisch ausgelesen wird (Fail-Safe-Option), sodass alle Ruder **04, 05, 06** in ihre Nullstellung verfahren werden. Optional kann auch gleichzeitig der Befehl zum Einschwenken der beiden Tragflächen **03** ausgegeben werden.

Desweiteren kann das Fehlfunktionsmodul **08** optional noch ein viertes Fehlfunktionssystem **29**, das ebenfalls zentral im Fehlerfall angesteuert wird. Das vierte Fehlfunktionssystem **29** weist mehrere selbstaufblasende Luftkissen **30** an der Außenseite des Messkörpers **01** auf, wobei sich bei einer Aktivierung des Fehlfunktionsmoduls **08** bzw. des vierten Fehlfunktionssystems **29** die Luftkissen **30** selbsttätig aufblasen. In der **Fig**. **2B** sind beispielhaft jeweils zwei Luftkissen **30** in unaufgeblasenem Zustand an der rechten und linken Flanke des Messkörpers **01** angedeutet. Bei einem Lufteinsatz dämpfen die aufgeblasenen Luftkissen **30** das Fieren an das Schleppflugzeug oder den Absturz des Messkörpers **01**, bei einem Wassereinsatz dämpfen sie das Einholen in das Schleppschiff oder lassen den Messkörper **01** auftreiben und an der Wasseroberfläche sichtbar werden.

Bei der Fehlfunktion, die zur Auslösung des Fehlfunktionsrmoduls **08** bzw. zur Auslösung eines oder mehrerer oder aller Fehlfunktionssysteme **09**, **24**, **28**, **29** führt, kann es sich beispielsweise um einen Ausfall der elektrischen Energieversorgung (Unterbrechung der elektrischen Leitungen, völlige Entladung der Akkumulatoren **34** an Bord des Messkörpers **01**) oder um ein Ansprechen eines Fehlerdetektors oder um ein manuelles Eingreifen (Boden-, Flug- oder Schiffspersonal) handeln. Je nach Einsatz operiert der Messkörper **01** mit einem Hauptantrieb autark ohne feste Verbindung zu einem Schleppfahrzeug. Oder der Messkörper **01** verfügt über keinen eigenen Hauptantrieb (höchstens über eine kleine Turbine **36** zum Aufladen der Akkumulatoren **34**) und wird über ein Tragseil **31** von einem Fahrzeug (insbesondere Schiff oder Flugzeug) durch das Wasser oder die Luft geschleppt. Das Tragseil **31** wird dann auf der Oberseite des Messkörpers **01** in seinem Mittenbereich (lösbar) eingehakt, vergleiche gestrichelte Andeutung in **Fig. 2A**, damit das Tragseil **31** den autonomen Flug- und Messbetrieb nicht stört.

### Bezugszeichenliste

- **01**: Messkörper
- **02**: Rumpf
- **03**: Tragfläche
- **04**: erstes Ruder (Querruder)
- **05**: zweites Ruder (Höhenruder)
- **06**: drittes Ruder (Seitenruder)
- **07**: Sensor
- **08**: Fehlfunktionsmodul
- **09**: erstes Fehlfunktionssystem
- **10**: Druckgefäß
- **11**: Druckzylinder
- **12**: Sperrventil
- **13**: Kolben von 11
- **14**: Kolbenboden von 13
- **15**: Kolbenstange von 13
- **16**: Führungselement an 13
- **17**: Drehachse
- **18**: Aufnahmeelement
- **19**: Kontur von 18
- **20**: Ellipse für 16
- **21**: große Halbachse von 20
- **22**: Aufnahmewinkel als 19
- **23**: Scheitelpunkt von 22
- **24**: zweites Fehlfunktionssystem
- **25**: Zahnscheibensegment
- **26**: Antriebsritzel
- **27**: Zugfeder
- **28**: drittes Fehlfunktionssystem
- **29**: viertes Fehlfunktionssystem
- **30**: Luftkissen
- **31**: Tragseil
- **32**: Ansteuerung für 03
- **33**: Hebel
- **34**: Akkumulator
- **35**: Sensor
- **36**: Turbine
- **37**: Fluidleitung

## Patentansprüche

1. Manövrierfähiger Messkörper (01) zur Ermittlung von Messdaten während seines Durchgangs durch ein Fluid zumindest mit zwei im Mittenbereich des Messkörpers (01) angeordneten Tragflächen (03), mehreren um Drehachsen (17) verstellbaren und ansteuerbaren Rudern (04, 05, 06), ein beim Auftreten einer Fehlfunktion automatisch aktiviertes Fehlfunktionsmodul (08) mit zumindest einem ersten Fehlfunktionssystem (09) zur Rückstellung der Ruder (04, 05, 06) in ihre zentrale Nullstellung und mit Akkumulatoren (34) zur elektrischen Energieversorgung und Sensoren (35, 07) zur Ermittlung der Messdaten und der Position des Messkörpers (01),
**dadurch gekennzeichnet, dass**
das erste Fehlfunktionssystem (09) pro Ruder (04, 05, 06) einen Druckzylinder (11) mit einem ausfahrbaren Kolben (13) aufweist, wobei jeder Kolben (13) einen Kolbenboden (14) und eine daran befestigte Kolbenstange (15) mit einem Führungselement (16) aufweist, das in ein Aufnahmeelement (18) einfahrbar ist, wobei jedes Aufnahmeelement (18) fest am jeweiligen Ruder (04, 05, 06) um dessen Drehachse (17) herum angeordnet ist und eine in dessen zentrale Nullstellung lenkende Kontur (19) aufweist, und ein gemeinsames Druckgefäß (10) umfasst, das mit den Druckzylindern (11) über Fluidleitungen (37) verbunden ist und ein elektromagnetisches Sperrventil (12) aufweist, das beim Aktivieren des Fehlfunktionsmoduls (08) automatisch geöffnet wird, wobei alle Kolben (13) durch eine Druckbeaufschlagung der Kolbenböden (14) durch das Fluid ausgefahren werden.

2. Manövrierfähiger Messkörper (01) nach Anspruch 1,
**dadurch gekennzeichnet, dass**
das Führungselement (16) in Form einer Ellipse (20) mit einer großen Halbachse (21), die in Verlängerung der Kolbenstange 815) angeordnet ist, und das Aufnahmeelement (18) in Form eines Aufnahmewinkels (22) mit einem Scheitelpunkt (23) ausgebildet ist, wobei die Drehachse (17) jedes Ruders (04, 05, 06) in Verlängerung des Scheitelpunkts (23) angeordnet ist.

3. Manövrierfähiger Messkörper (01) nach Anspruch 1 oder 2,
**dadurch gekennzeichnet, dass**
die Kolben (13) in einem Bereich von 2 mm bis 10 mm, bevorzugt 6 mm, besonders bevorzugt 3 mm, ausgefahren werden.

4. Manövrierfähiger Messkörper (01) nach einem der vorangehenden Ansprüche,
**dadurch gekennzeichnet, dass**
die beiden Tragflächen (03) um je eine vertikale Drehachse (17) schwenkbar ausgebildet sind und das Fehlfunktionsmodul (08) ein zweites Fehlfunktionssystem (24) umfasst, wobei bei einer Aktivierung des zweiten Fehlfunktionssystems (24) die beiden Tragflächen (03) zum Messkörper (01) hineingeschwenkt werden.

5. Manövrierfähiger Messkörper (01) nach Anspruch 4,
**dadurch gekennzeichnet, dass**
das zweite Fehlfunktionssystem (24) zwei Zahnscheibensegmente (25) aufweist, wobei an jeder Tragfläche (03) ein Zahnscheibensegment (25) fest angeordnet ist und die beiden Zahnscheibensegmente (25) miteinander im Eingriff stehen, sowie ein elektromagnetisch verschiebbares Antriebsritzel (26) und zumindest eine Zugfeder (27) aufweist, wobei das Antriebsritzel (26) mit einem der beiden Zahnscheibensegmente (25) in Eingriff bringbar ist und die Zugfeder (27) fest mit einer der beiden Tragflächen (03) und dem Messkörper (01) verbunden und bei ausgeschwenkten Tragflächen (03) gespannt ist.

6. Manövrierfähiger Messkörper (01) nach Anspruch 5,
**dadurch gekennzeichnet, dass**
mittels Antriebsritzel (26) und Zahnscheibensegmente (25) die Tragflächen (03) auch ausschwenkbar sind.

7. Manövrierfähiger Messkörper (01) nach einem der vorangehenden Ansprüche 4 bis 6,
**dadurch gekennzeichnet, dass**
das Fehlfunktionsmodul (08) ein drittes Fehlfunktionssystem (28) umfasst, wobei bei einer Aktivierung des dritten Fehlfunktionssystems (28) die Ruder (04, 05, 06) in ihre zentrale Nullstellung und/oder die beiden Tragflächen (03) zum Messkörper (01) hin eingeschwenkt werden.

8. Manövrierfähiger Messkörper (01) nach Anspruch 7,
**dadurch gekennzeichnet, dass**
das dritte Fehlfunktionssystem (28) computerimplementiert ist und einen Fail-Safe-Steuerdatensatz umfasst.

9. Manövrierfähiger Messkörper (01) nach einem der vorangehenden Ansprüche 7 bis 8,
**dadurch gekennzeichnet, dass**
das Fehlfunktionsmodul (08) ein viertes Fehlfunktionssystem (29) umfasst, das mehrere selbstaufblasende Luftkissen (30) an der Außenseite des Messkörpers (01) aufweist, wobei sich bei einer Aktivierung des vierten Fehlfunktionssystems (29) die Luftkissen (30) selbsttätig aufblasen.

10. Manövrierfähiger Messkörper (01) nach einem der vorangehenden Ansprüche,
**dadurch gekennzeichnet, dass**
die Fehlfunktion hervorgerufen ist durch einen Ausfall der elektrischen Energieversorgung oder durch das Ansprechen eines Fehlerdetektors oder durch manuelles Eingreifen.

11. Manövrierfähiger Messkörper (01) nach einem der vorangehenden Ansprüche,
**dadurch gekennzeichnet, dass**
dieser mittels eines Tragseils (31), das im Mittenbereich des Messkörpers (01) einklinkbar ist, von einem angetriebenen Fahrzeug durch das Fluid schleppbar ist.

12. Manövrierfähiger Messkörper (01) nach einem der vorangehenden Ansprüche,
**dadurch gekennzeichnet, dass**
dieser autonom durch das Fluid manövriert.

13. Manövrierfähiger Messkörper (01) nach einem der vorangehenden Ansprüche,
**dadurch gekennzeichnet, dass**
es sich bei dem Fluid um Luft oder Wasser handelt.

## Claims

1. A maneuverable measurement body (01) for determining measurement data during its passage through a fluid, at least comprising two airfoils (03) that are arranged in the central region of the measurement body (01), multiple controllable rudders (04, 05, 06) that can be adjusted about their axes of rotation (17), a malfunction module (08) that is automatically activated in the event of a malfunction and has at least a first malfunction system (09) for resetting the rudders (04, 05, 06) into their central zero position, as well as accumulators (34) for the electrical power supply and sensors (35, 07) for determining the measurement data and the position of the measurement body (01),
**characterized in that**
the first malfunction system (09) has a pressure cylinder (11) with an extendable piston (13) per rudder (04, 05, 06), wherein each piston (13) has a piston head (14) and a piston rod (15), which is fastened on the piston head and has a guide element (16) that can be moved into a receiving element (18), wherein each receiving element (18) is rigidly arranged on the respective rudder (04, 05, 06) about its axis of rotation (17) and has a contour (19) channeling into its central zero position, wherein said first malfunction system comprises a common pressure vessel (10) that is connected to the pressure cylinders (11) via fluid lines (37) and has an electromagnetic stop valve (12), which is automatically opened upon an activation of the malfunction module (08), and wherein all pistons (13) are extended when the piston heads (14) are acted upon with pressure by the fluid.

2. The maneuverable measurement body (01) according to claim 1,
**characterized in that**
the guide element (16) is realized in the form of an ellipse (20) with a semi-major axis (21), which is arranged in extension of the piston rod (15), and the receiving element (18) is realized in the form of a receiving angle (22) with a vertex (23), wherein the axis of rotation (17) of each rudder (04, 05, 06) is arranged in extension of the vertex (23).

3. The maneuverable measurement body (01) according to claim 1 or 2,
**characterized in that**
the pistons (13) are extended by a distance in the range between 2 mm and 10 mm, preferably 6 mm, particularly 3 mm.

4. The maneuverable measurement body (01) according to one of the preceding claims,
**characterized in that**
the two airfoils (03) are realized so as to be pivotable about a respective vertical axis of rotation (17) and the malfunction module (08) comprises a second malfunction system (24), wherein the two airfoils (03) are pivoted toward the measurement body (01) upon an activation of the second malfunction system (24).

5. The maneuverable measurement body (01) according to claim 4,
**characterized in that**
the second malfunction system (24) comprises two toothed disk segments (25), wherein one toothed disk segment (25) is rigidly arranged on each airfoil (03) and the two toothed disk segments (25) are engaged with one another, as well as an electromagnetically displaceable driving pinion (26) and at least one tension spring (27), wherein the driving pinion (26) can be engaged with one of the two toothed disk segments (25) and the tension spring (27) is rigidly connected to one of the two airfoils (03) and the measurement body (01) and tensioned when the airfoils (03) are pivoted out.

6. The maneuverable measurement body (01) according to claim 5,
**characterized in that**
the airfoils (03) can also be pivoted out by means of the driving pinion (26) and the toothed disk segments (25) .

7. The maneuverable measurement body (01) according to one of preceding claims 4 to 6,
**characterized in that**
the malfunction module (08) comprises a third malfunction system (28), wherein the rudders (04, 05, 06) are pivoted into the central zero position and/or the two airfoils (03) are pivoted toward the measurement body (01) upon an activation of the third malfunction system (28).

8. The maneuverable measurement body (01) according to claim 7,
**characterized in that**
the third malfunction system (28) is computer-implemented and comprises a fail-safe control data set.

9. The maneuverable measurement body (01) according to one of preceding claims 7 to 8,
**characterized in that**
the malfunction module (08) comprises a fourth malfunction system (29), which has multiple self-inflatable air cushions (30) on the outer side of the measurement body (01), wherein the air cushions (30) automatically inflate upon an activation of the fourth malfunction system (29).

10. The maneuverable measurement body (01) according to one of the preceding claims,
**characterized in that**
the malfunction is caused by an outage of the electrical power supply or by the response of a fault detector or by manual intervention.

11. The maneuverable measurement body (01) according to one of the preceding claims,
**characterized in that**
it can be towed through the fluid by a driven vehicle with the aid of a bearer cable (31), which can be engaged in the central region of the measurement body (01) .

12. The maneuverable measurement body (01) according to one of the preceding claims,
**characterized in that**
it autonomously maneuvers through the fluid.

13. The maneuverable measurement body (01) according to one of the preceding claims,
**characterized in that**
the fluid is air or water.

## Revendications

1. Corps de mesure manœuvrable (01), pour déterminer des données de mesure pendant un passage à travers un fluide, avec au moins deux surfaces porteuses (03), placées dans la zone centrale du corps de mesure (01), plusieurs avirons (04, 05, 06) ajustables et susceptibles d'être commandés autour d'axes de rotation (17), un module de dysfonctionnement (08), automatiquement activé lors de la survenance d'une dysfonctionnement, doté d'au moins un premier système de dysfonctionnement (09), pour replacer les avirons (04, 05, 06) dans leur position neutre centrale et doté d'accumulateurs (34), pour l'alimentation électrique et de capteurs (35, 07) pour déterminer les données de mesure et la position du corps de mesure (01),
**caractérisé en ce que**
le premier système de dysfonctionnement (09) comporte par aviron (04, 05, 06) un vérin de pression (11), pourvu d'un piston (13) déployable, chaque piston (13) comportant une tête de piston (14) et une tige de piston (15), fixée sur celle-ci, avec un élément de guidage (16), qui peut s'introduire dans un élément récepteur (18), chaque élément récepteur (18) étant placé fixement sur l'aviron (04, 05, 06) concerné, autour de l'axe de rotation (17) de celui-ci et comportant un contour (19) dirigeant dans la position neutre de celui-ci, et comprenant un récipient sous pression (10) qui est relié avec les vérins de pression (11) par l'intermédiaire de conduits à fluide (37) et qui comporte une vanne d'arrêt (12) électromagnétique, qui lors de l'activation du module de dysfonctionnement (08) s'ouvre automatiquement, tous les pistons (13) étant extraits par l'exercice d'une pression sur les têtes de pistons (14) par le fluide.

2. Corps de mesure manœuvrable (01) selon la revendication 1,
**caractérisé en ce que**
l'élément de guidage (16) est conçu sous la forme d'une ellipse (20), pourvue d'un demi-grand axe (21), qui est placé dans le prolongement de la tige de piston (15), et l'élément récepteur (18) est conçu sous la forme d'un angle de prise (22) avec un sommet (23), l'axe de rotation (17) de chaque aviron (04, 05, 06) étant placé dans le prolongement du sommet (23).

3. Corps de mesure manœuvrable (01) selon la revendication 1 ou 2,
**caractérisé en ce que**
les pistons (13) se déploient dans un ordre de 2 mm à 10 mm, de préférence de 6 mm, de manière particulièrement préférentielle, de 3 mm.

4. Corps de mesure manœuvrable (01) selon l'une quelconque des revendications précédentes, **caractérisé en ce que**
les deux surfaces porteuses (03) sont conçues en étant susceptibles de pivoter autour de chacune un axe de rotation (17) vertical et le module de dysfonctionnement (08) comporte un deuxième système de dysfonctionnement (24), lors d'une activation du deuxième système de dysfonctionnement (24), les deux surfaces porteuses (03) pivotant vers l'intérieur du corps de mesure (01).

5. Corps de mesure manœuvrable (01) selon la revendication 4,
**caractérisé en ce que**
le deuxième système de dysfonctionnement (24) comporte deux segments de poulie dentée (25), sur chaque surface porteuse (03) étant fixement placé un segment de poulie dentée (25) et les deux segments de poulie dentée (25) s'engrenant mutuellement, et comporte également un pignon menant (26) à déplacement électromagnétique et au moins un ressort de traction (27), le pignon menant (26) étant susceptible de s'engrener avec l'un des deux segments de poulie dentée (25) et le ressort de traction (27) étant fixement relié avec l'une des deux surfaces porteuses (03) et avec le corps de mesure (01) et étant tendu lorsque les surfaces porteuses (03) sont pivotées vers l'extérieur.

6. Corps de mesure manœuvrable (01) selon la revendication 5,
**caractérisé en ce que**
les surfaces porteuses (03) sont également susceptibles de pivoter vers l'extérieur au moyen du pignon menant (26) et des segments de poulie dentée (25)

7. Corps de mesure manœuvrable (01) selon l'une quelconque des revendications précédentes 4 à 6, **caractérisé en ce que**
le module de dysfonctionnement (08) comprend un troisième système de dysfonctionnement (28), lors d'une activation du troisième système de dysfonctionnement (28), les avirons (04, 05, 06) pivotant dans leur position neutre centrale et / ou les deux surfaces porteuses (03) pivotant vers l'intérieur du corps de mesure (01).

8. Corps de mesure manœuvrable (01) selon la revendication 7,
**caractérisé en ce que**
le troisième système de dysfonctionnement (28) est mis en œuvre par ordinateur et comprend un jeu de données de contrôle d'urgence.

9. Corps de mesure manœuvrable (01) selon l'une quelconque des revendications précédentes 7 à 8, **caractérisé en ce que**
le module de dysfonctionnement (08) comprend un quatrième système de dysfonctionnement (29), qui comporte plusieurs coussins d'air (30) auto-gonflables sur la face extérieure du corps de mesure (01), lors d'une activation du quatrième système de dysfonctionnement (29), les coussins d'air (30) se gonflant automatiquement.

10. Corps de mesure manœuvrable (01) selon l'une quelconque des revendications précédentes, **caractérisé en ce que**
la dysfonctionnement est provoquée par une panne de l'alimentation électrique ou par la réponse d'un détecteur d'erreur ou par une intervention manuelle.

11. Corps de mesure manœuvrable (01) selon l'une quelconque des revendications précédentes, **caractérisé en ce que**
celui-ci est susceptible d'être remorqué par un véhicule motorisé à travers le fluide par un câble porteur (31), qui est encliquetable dans la zone médiane du corps de mesure (01).

12. Corps de mesure manœuvrable (01) selon l'une quelconque des revendications précédentes, **caractérisé en ce que**
celui-ci manœuvre de manière autonome à travers le fluide.

13. Corps de mesure manœuvrable (01) selon l'une quelconque des revendications précédentes, **caractérisé en ce que**
le fluide est de l'air ou de l'eau.
